# EUROPEAN PATENT APPLICATION

(11) **EP 1 953 687 A1**
(43) Date of publication of application: **06.08.2008**
(21) Application number: 07024023.9
(22) Date of filing: 11.12.2007
(51) Int. Cl.: G06Q 10/00

(54) **Method and system for analyzing process models**

(30) Priority: 31.01.2007 US 700401
(71) Applicant: SAP AG, 69190 Walldorf (DE)
(72) Inventor: Dreiling, Alexander, Kelvin Grove QLD 4059 (AU)
(74) Representative: Müller-Boré & Partner Patentanwälte

(57) **Abstract**

A method and system are described for analyzing process models. An example method includes determining a first perspective based on a first goal of a user. The method further includes selecting a first task definition related to the first goal, obtaining one or more process models, wherein each process model includes a plurality of task nodes each representing task instances arranged in one or more ordered paths, wherein each of the task nodes represents a task instance associated with one of the task definitions, determining a first related node set of one or more of the task nodes based on determining one or more of the task nodes representing task instances associated with the first task definition, and sending an indication to the user of one or more relative locations in the ordered paths of the task nodes included in the first related node set.

## Description

### TECHNICAL FIELD

This description relates to techniques for analyzing process models.

### BACKGROUND

Process models such as business process models may provide abstractions of groups of single process instances associated with processes of a business. These models may be depicted in a variety of modeling languages. Thus, different modeling languages may have differing degrees of expressiveness leading to more abstract models or less abstract models depending on their purpose. For the purpose of technical execution, business process models may be unambiguously defined so that they are machine-interpretable; however, these models may be quite large. However, process models that depict a process from a business perspective may provide abstract views that are different from execution details that may be necessary at a technical level; however, these models may include a significant amount of information that may be unnecessary for a technical description.

An example business process may include a collection of activities designed to produce a specific output for a particular customer or market. For example, a business process may imply an emphasis on how work is done within an organization. A process may thus be viewed as a specific ordering of work activities across time and place, with a beginning, an end, and clearly defined inputs and outputs.

Business process models that capture the processes of an organization may be too large to be easily accessed by decision makers at higher management levels of a business. However, higher management level personnel may be responsible for the processes and thus may need to be informed as to how the processes are executed in an easily accessible way. This need may become more apparent if managers need to streamline processes in order to achieve strategies of an organization more efficiently. However, many conventional process models, which may provide a model of a process for analysis, may be flat and large, and comprehending such models may require significant time and effort. Current process models may therefore be largely unsuitable for managerial analysis.

For example, a split in a process, wherein 98 percent of all instances may go right and only two percent may go left, may be shown by a flat process model; however, an analyst using such a model may only be informed by some annotation that there is a significant imbalance.

Thus, it may be desirable to provide techniques which may improve analysis of process models, for example, for managerial analysis of business processes.

### SUMMARY

According to one general aspect, a system includes a perspective analysis processor including a perspective engine configured to determine a first perspective based on a first goal of a user. The perspective analysis processor may include a task definition engine configured to select a first task definition related to the first goal, wherein the first task definition is selected from a plurality of task definitions each representing a predetermined task, a process model manager configured to obtain one or more process models, wherein each process model includes a plurality of task nodes arranged in one or more ordered paths, wherein each of the task nodes represents a task instance associated with one of the task definitions, wherein the ordered paths are ordered according to an order of execution of the task instance represented by each task node included in each process model, and a node location analysis engine configured to determine a first related node set of one or more of the task nodes based on determining one or more of the task nodes representing task instances associated with the first task definition, and send an indication to the user of one or more relative locations in the ordered paths of the task nodes included in the first related node set.

According to another aspect, a method includes determining a first perspective based on a first goal of a user. The method may further include selecting a first task definition related to the first goal, wherein the first task definition is selected from a plurality of task definitions each representing a predetermined task, obtaining one or more process models, wherein each process model includes a plurality of task nodes arranged in one or more ordered paths, wherein each of the task nodes represents a task instance associated with one of the task definitions, wherein the ordered paths are ordered according to an order of execution of the task instance represented by each task node included in each process model, determining a first related node set of one or more of the task nodes based on determining one or more of the task nodes representing task instances associated with the first task definition, and sending an indication to the user of one or more relative locations in the ordered paths of the task nodes included in the first related node set.

According to yet another aspect, a computer program product is tangibly embodied on a computer-readable medium and is configured to cause a data processing apparatus to determine a first perspective based on a first goal of a user, select a first task definition related to the first goal, wherein the first task definition is selected from a plurality of task definitions each representing a predetermined task, obtain one or more process models, wherein each process model includes a plurality of task nodes arranged in one or more ordered paths, wherein each of the task nodes represents a task instance associated with one of the task definitions, wherein the ordered paths are ordered according to an order of execution of the task instance represented by each task node included in each process model, determine a first related node set of one or more of the task nodes based on determining one or more of the task nodes representing task instances associated with the first task definition, and send an indication to the user of one or more relative locations in the ordered paths of the task nodes included in the first related node set.

The details of one or more implementations are set forth in the accompanying drawings and the description below. Other features will be apparent from the description and drawings, and from the claims.

### BRIEF DESCRIPTION OF THE DRAWINGS

FIG 1 is a block diagram of an example system for analyzing process models according to an example embodiment.

FIG. 2 is a flowchart illustrating an operation of the example system of FIG 1.

FIG 3a depicts example process models according to an example embodiment.

FIG. 3b depicts the example process models of FIG 3a with highlighted nodes according to an example embodiment.

FIG. 4 depicts an example portion of a process model with a highlighted node according to an example embodiment.

FIG. 5 depicts example portions of process models with highlighted nodes according to an example embodiment.

FIG 6 depicts an example intermediate form of example aggregated process models with highlighted nodes according to an example embodiment.

FIG 7 depicts an example aggregated process model with highlighted nodes according to an example embodiment.

FIG 8 depicts an example process model according to an example embodiment.

FIG 9 depicts an example view of an example association of key performance indicators (KPIs) and selected task definitions according to an example embodiment.

FIG 10 depicts an example representation of a process model in an intermediate form during an example perspective analysis processing according to an example embodiment.

FIG 11 depicts an example representation of a process model in an intermediate form during an example perspective analysis processing according to an example embodiment.

FIG 12 depicts an example critical path of a process model based on an example perspective analysis processing according to an example embodiment.

FIG. 13 depicts an example representation of a process model in an intermediate form during an example perspective analysis processing according to an example embodiment.

FIG 14 depicts an example critical path of a process model based on an example perspective analysis processing according to an example embodiment.

### DETAILED DESCRIPTION

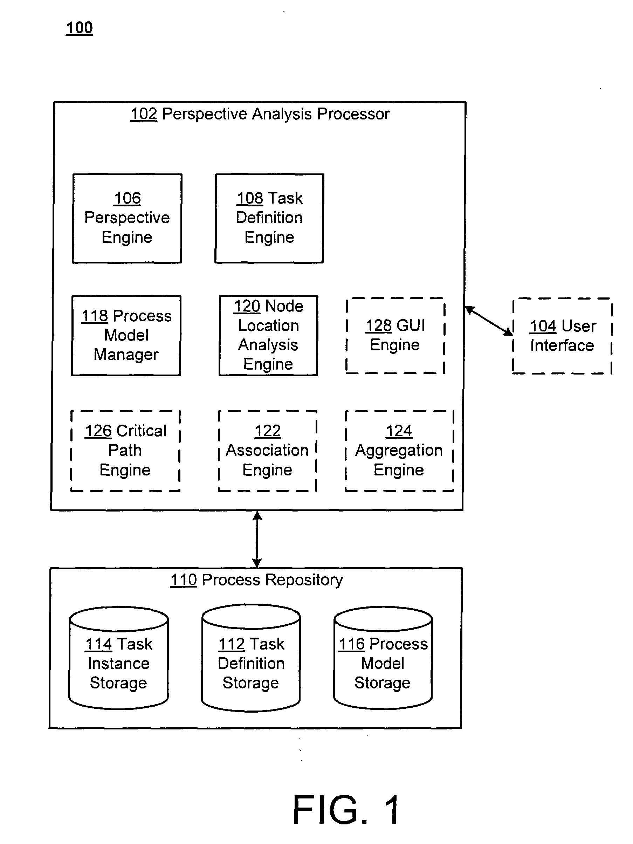

FIG 1 is a block diagram of a system 100 for analyzing process models. In the example of FIG. 1, a perspective analysis processor 102 may include various processing engines that provide and perform processing of process models that may be displayed, for example, for users via a user interface 104. For example, the user may view via a graphical user interface process models in accordance with various perspectives, for example, via a perspective of one or more key performance indicators (KPIs). For example, the user may choose to view a process model from example perspectives of customer satisfaction and supply chain efficiency. As another example, the user may choose to view a process model from an example perspective of a selected task definition, for example, selected by the user. Example perspectives may include KPIs, activity based costing (ABC) classes, Strengths, Weaknesses, Opportunities, Threats (SWOT) categories, scorecard items, portfolio categories, or other perspectives of managerial concern. Other example perspectives may include a frequency of task node occurrence in the process models, a task cost, an importance of an event, or a context.

For example, with regard to ABC analysis, a user may observe that 10% of all tasks lead to 80% of value generation, and may desire a view of processes from a perspective of these particular tasks. As another example, the user may observe that 10% of all events lead to 80% of risk of economic failure, and may desire a view of processes from a perspective of these particular events. As yet another example, the user may observe that 10% of all resources involved in the processes lead to 80% cost, and may desire a view of processes from a perspective of these particular resources. As another example, the user may observe that 10% of all execution paths explain 80% of all process instances, and may thus desire a view of processes from a perspective of these particular frequently occurring processes.

The perspective analysis processor 102 may include a perspective engine 106 configured to determine perspectives based on goals of a user. For example, the user may determine a perspective of customer satisfaction based on a goal of ensuring maximal customer satisfaction. For example, the user may wish to determine potential tasks leading up to, or resulting from, a task "call customer." Thus, the user may desire information regarding tasks that may indicate a negative impact on customer satisfaction, as well as tasks that may indicate a positive impact on customer satisfaction. For example, for tasks that may indicate a positive impact on customer satisfaction, the user may desire information on related tasks from the customer satisfaction perspective in order to try to increase activity or otherwise modify the tasks to increase customer satisfaction. The perspective may be related to a key performance indicator (KPI) view of a business process. As another example, the user may determine a perspective of supply chain efficiency based on a goal of ensuring efficiency in a supply chain.

According to an example embodiment, the user may determine a particular task definition of interest to the user, and may determine a perspective from the particular task definition of interest. For example, the user may determine a perspective of a particular task definition based on a goal of determining tasks that may provide input to the particular task definition, as well as tasks that may receive output from the particular task definition as input to the tasks, in order to determine potential effects on the system by revising the particular task definition. For example, if a user determines a goal of changing all document formats to an electronic document format, then the user may determine a particular task definition "print document" as a perspective. For example, the user may desire information regarding all task definitions that may provide input to "print document," as well as all task definitions that receive output from "print document" in order to determine potential effects on a system that may result from a conversion of the document format.

According to an example embodiment, a task definition engine 108 may be configured to select task definitions related to the goals. According to an example embodiment, the task definitions may be selected from a plurality of task definitions each representing a predetermined task. For example, the task definitions may represent tasks such as "call customer" and "print document." The task definition engine 108 may accept input from a user to select task definitions, for example, by selecting task nodes displayed in a model process via the user interface 104.

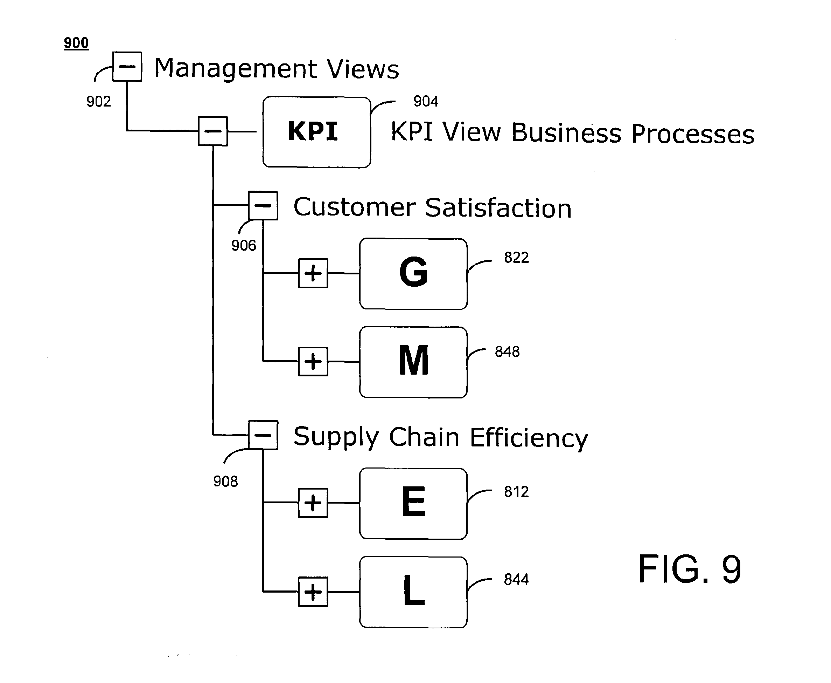

For example, the task definition engine 108 may accept input from a user to select task definitions, for example, via a drag-and-drop operation. For example, a task node may be dragged from a process model view to drop the selection into a tree view, as discussed below with regard to FIG. 9. As another example, a user may right-click on a task node and assign the task to a perspective. As yet another example, the user may use shading to select a task node to be associated with a perspective indicated, for example, by the shading. The user may also enclose the task node, for example, by drawing a box around the task node to be selected.

According to an example embodiment, a process repository 110 may be configured to store information associated with process models. For example, information regarding the task nodes of a process model may be stored in the process repository 110. According to an example embodiment, the process repository may include a task definition storage area 112 that may be configured to store task definition information associated with one or more task definitions associated with task nodes included in one or more process models associated with process model information associated with process models. For example, the task definition information associated with each of the example tasks "call customer" and "print document" may be stored in the task definition storage area 112. For example, the task definition information may include descriptive information associated with multiple instances or occurrences of the example tasks "call customer" and "print document." For example, the task definition information may include class definition information associated with instantiating instances or occurrences of the example tasks "call customer" and "print document." The task definition information may also include information indicating locations of task instances associated with each of the task definitions. For example, the task definition information may include information indicating locations of all task instances of the task "print document" represented by task nodes in process models included in the process repository 110.

According to an example embodiment, the process repository 110 may include a task instance storage area 114 that may be configured to store task instance information associated with one or more task instances associated with one or more task definitions associated with the task definition information. According to an example embodiment, the task instance storage area 114 may include information regarding locations within the process models of associated task nodes, and instantiation information for task instances of the "call customer" and "print document" tasks discussed previously.

According to an example embodiment, the process repository 110 may include a process model storage area 116 that may be configured to store process model information. For example, the process model information may include information associated with one or more process models. For example, the process model information may include information associated with task nodes included in process models. For example, the process model information may include information associated with paths including the task nodes, for example, with regard to an ordering of the task nodes. For example, the ordering of the task nodes may correspond to an ordering of execution of the task instances represented by the task nodes. For example, the process model information may include information associated with displaying the process models for the user, for example, via the user interface 104.

An example process model manager 118 may be configured to obtain process models, for example, from the process model storage area 116. Thus, the process model manager 118 may obtain the process model information. As discussed previously, each process model may include a plurality of task nodes arranged in one or more ordered paths. According to an example embodiment, each of the task nodes may represent a task instance associated with one of the task definitions, and the ordered paths may be ordered according to an order of execution of the task instance represented by each task node included in each process model. For example, a process model may include example task nodes representing example task instances A, B, and C, and an ordered path including these task instances may be ordered according to an order of execution of the task instance represented by each of the task nodes A, B, and C included in the process model. Thus, the process model manager 118 may be further configured to obtain the task definition information and task instance information corresponding to process model nodes from the task definition storage area 112 and the task instance storage area 114, respectively.

An example node location analysis engine 120 may be configured to determine related node sets of task nodes based on determining one or more of the task nodes representing task instances associated with particular task definitions, and send an indication to the user of one or more relative locations in the ordered paths of the task nodes included in the related node sets. For example, for a task definition "print document" the node location analysis engine 120 may determine locations of task instances associated with the task definition, for example, based on retrieving information associated with the task definition from the task definition storage area 112. The location analysis engine 120 may further base the determination on process model information retrieved from the process model storage area 116. The node location analysis engine 120, for example, may then determine a related node set of task nodes representing the task instances included in a process model based on the determined locations. For example, the node location analysis engine 120 may determine task nodes included in a process model that represent instances of the task "print document." The node location analysis engine 120 may then send an indication to the user of one or more relative locations in the ordered paths of the task nodes included in the related node sets as discussed below, for example, via the user interface 104.

According to an example embodiment, the node location analysis engine 120 may be configured to determine predecessor node sets of one or more of the task nodes based on determining predecessor nodes located immediately preceding each of the task nodes included in a related node set based on an ordering of task nodes associated with each ordered path. According to an example embodiment, the node location analysis engine 120 may be configured to determine successor node set of one or more of the task nodes based on determining successor nodes located immediately succeeding each of the task nodes included in the related node set based on an ordering of task nodes associated with each ordered path. For example, if a related node set includes task nodes representing one or more task instances C, and if one or more process models include a first ordered sequence A, C, F, a second ordered sequence H, C, W, and third ordered sequence A, C, F in ordered paths included in the process models, then the node location analysis engine 120 may determine a predecessor node set including A and H, and a successor node set including F and W

According to an example embodiment, an association engine 122 may be configured to generate associations between perspectives and task definitions. For example, the association engine 122 may generate an association between a perspective "customer satisfaction" and a task definition "call customer." For example, a user may select the task definition and indicate the association between the perspective and the task definition, for example, by dragging and dropping an indicator of a task node in a graphical display into a tree structure as discussed below with regard to FIG. 9. As another example, the user may select a task node, and the association engine 122 may generate an association between a perspective of the particular task node and an associated task definition. For example, the user may select a task node C displayed in a process model, and the association engine 122 may generate an association between the task node C and the associated task definition C, for example, to determine a perspective view of the process landscape within the process model(s) from the perspective of the associated task definition C. For example, the user may request an example view of all predecessor task definitions and/or all successor task definitions to the task definition C within the process model(s), for example, based on determining all task nodes that immediately precede task nodes representing task instances C associated with the task definition C, and/or all task nodes that immediately succeed task nodes representing task instances C associated with the task definition C, as discussed previously with regard to the location analysis engine 120. Such an example view may provide the user with information, for example, regarding potential impacts on other task definitions that may result by revising the task definition C.

According to an example embodiment, an aggregation engine 124 may be configured to generate an ordered aggregated related node set based on aggregating a predecessor node set, a related node set, and a successor node set. For example, the aggregation engine 124 may generate the ordered aggregated related node set based on joining output edges of the task nodes included in the predecessor node set to an input edge of a task node included in the related node set and splitting an output edge of the task node included in the first related node set to input edges of the task nodes included in the successor node set.

For example, if a related node set includes task nodes representing task instances C, and if one or more process models include a first ordered sequence A, C, F, a second ordered sequence H, C, W, and third ordered sequence A, C, F in ordered paths included in the process models, then the node location analysis engine 120 may determine a predecessor node set including A and H, and a successor node set including F and W with regard to the task definition C. The aggregation engine 124 may then, for example, generate an ordered aggregated related node set based on joining output edges of A and H to an input edge of a task node C, and splitting an output edge of the task node C to input edges of F and W

According to an alternative embodiment, path information may be maintained with the successor nodes regarding which nodes included in the predecessor node set precede the node C in the process model path that includes a particular successor node to the node C, in order that the user may determine the original ordered sequence in a particular ordered path. For example, path information may be maintained indicating that A precedes C in the original ordered path that includes successor node F. However, a user may not need such information to determine only which nodes precede and/or succeed task nodes associated with a selected task definition. For example, the path information may be displayed for the user in association with the respective successor nodes via the user interface 104.

According to an example embodiment, an example critical path engine 126 may be configured to determine critical paths related to perspectives based on determining that a task definition is associated with a task represented by one of the task nodes. For example, a critical path may include one of the ordered paths included in one of the process models. As discussed herein, a "critical path" may refer, for example, to an ordered path in a process model that includes task nodes representing task definitions that may be related to execution results of the model with regard to one or more perspectives of the user. For example, a critical path may be determined as including task nodes representing task definitions that are related to, or are associated with, a perspective such as a key performance indicator, for example, customer satisfaction. According to an example embodiment, the critical path engine may be configured to send an indication to a user of relative locations in the first critical path of the task nodes included in the first critical path.

The perspective analysis processor 102 may further include a graphical user interface (GUI) engine 128 that may be configured, for example, to generate a highlighted display of one or more of the task nodes. For example, the GUI engine 128 may generate a highlighted display of one or more of the task nodes included in a critical path, for example, a critical path determined by the critical path engine 126. For example, the highlighted display may include a display of the task nodes included in a critical path filled or outlined with a color that is different from a fill color or outline color of other nodes included in the process models. For example, the highlighted display may include a display of the task nodes included in a critical path filled with hashed lines or blinking.

According to an example embodiment, the GUI engine 128 may generate a highlighted display of one or more of particular task nodes associated with a task definition associated with a perspective. For example, the highlighted display may include a display of the particular task nodes filled or outlined with a color that is different from a fill color of other nodes included in the process models, or may include a blinking, hashed, or lighted display. For example, the GUI engine 128 may generate a display of highlighted nodes immediately after a user requests a view of all task nodes associated with a particular perspective.

According to yet another example embodiment, the GUI engine 128 may send to the user a graphical display of one or more relative locations in the ordered paths of task nodes included in related node sets.

One skilled in the art of data processing will appreciate that many different types of highlighting may be used by the GUI engine 128. Further, there may be many different ways a user may receive results of perspective analyses.

Example methods and systems are discussed herein for analyzing process models. Example methods and systems may enhance the accessibility to process models by managerial users. Example methods and systems described herein may, for example, provide depictions of a process landscape from the perspectives of, for example, critical or important events or activities. Example methods and systems described herein may provide example views of one or more paths within a complex process model that may be considered "critical" or "important" from a particular example perspective viewpoint. Such example perspectives may include key performance indicators, ABC classes, scorecard items, portfolio categories, or other perspectives of managerial concern. For example, perspectives may be depicted as highlighted paths through complex process models or as integrated pictures that depict predecessors and/or successors of a particular "critical" or selected process element or node. In this context, "critical" process elements or nodes may refer to process elements or nodes that may be considered by a user as "important" in terms of potential decisions that may be made regarding a process. For example, decisions to revise particular process elements or nodes may have potential negative or positive effects on the rest of the process. Thus, the user may wish to view a process landscape from various perspectives to analyze such potential effects.

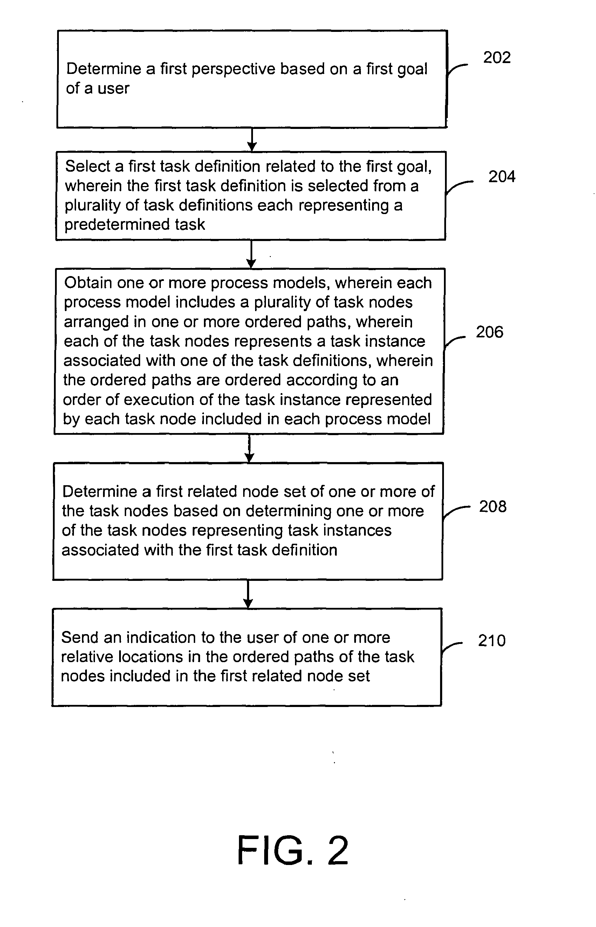

FIG. 2 is a flowchart illustrating an example operation of the system of FIG. 1. According to an example embodiment, a first perspective may be determined based on a first goal of a user (202). For example, the perspective engine 106 may determine perspectives based on goals of a user. For example, the user may determine a perspective of customer satisfaction based on a goal of ensuring maximal customer satisfaction. Thus, the user may desire information regarding tasks that may indicate a negative impact on customer satisfaction, as well as tasks that may indicate a positive impact on customer satisfaction. For example, for tasks that indicate a positive impact on customer satisfaction, the user may desire information on related tasks from the customer satisfaction perspective in order to try to increase activity or otherwise modify the tasks to increase customer satisfaction. The perspective may be related to a key performance indicator (KPI) view of a business process. As another example, the user may determine a perspective of supply chain efficiency based on a goal of ensuring efficiency in a supply chain.

A first task definition related to the first goal may be selected, wherein the first task definition is selected from a plurality of task definitions each representing a predetermined task (204). For example, the task definition engine 108 may select task definitions related to the goals as discussed previously. According to an example embodiment, the task definitions may be selected from a plurality of task definitions each representing a predetermined task. For example, the task definitions may represent tasks such as "call customer" and "print document." The example task definition engine 108 may accept input from a user to select task definitions, for example, by selecting task nodes displayed in a model process via the user interface 104 and the GUI engine 128.

One or more process models may be obtained, wherein each process model includes a plurality of task nodes arranged in one or more ordered paths, wherein each of the task nodes represents a task instance associated with one of the task definitions, wherein the ordered paths are ordered according to an order of execution of the task instance represented by each task node included in each process model (206). For example, the process model manager 118 may obtain process models, for example, from the process model storage area 116. Thus, the process model manager 118 may obtain the process model information. As discussed previously, each process model may include a plurality of task nodes arranged in one or more ordered paths. According to an example embodiment, each of the task nodes may represent a task instance associated with one of the task definitions, and the ordered paths may be ordered according to an order of execution of the task instance represented by each task node included in each process model. For example, a process model may include example task nodes representing example task instances A, B, and C, and an ordered path including these task instances may be ordered according to an order of execution of the task instance represented by each of the task nodes A, B, and C included in the process model.

A first related node set of one or more of the task nodes may be determined, based on determining one or more of the task nodes representing task instances associated with the first task definition (208). For example, the node location analysis engine 120 may determine related node sets of task nodes based on determining one or more of the task nodes representing task instances associated with particular task definitions. For example, for a task definition "print document" the node location analysis engine 120 may determine locations of task instances associated with the task definition, for example, based on retrieving information associated with the task definition from the task definition storage area 112. The node location analysis engine 120, for example, may then determine a related node set of task nodes representing the task instances included in a process model based on the determined locations. For example, the node location analysis engine 120 may determine task nodes included in a process model that represent instances of the task "print document."

An indication of one or more relative locations in the ordered paths of the task nodes included in the first related node set may be sent to the user (210). For example, the node location analysis engine 120 may send an indication to the user of one or more relative locations in the ordered paths of the task nodes included in the related node sets, for example, via the user interface 104.

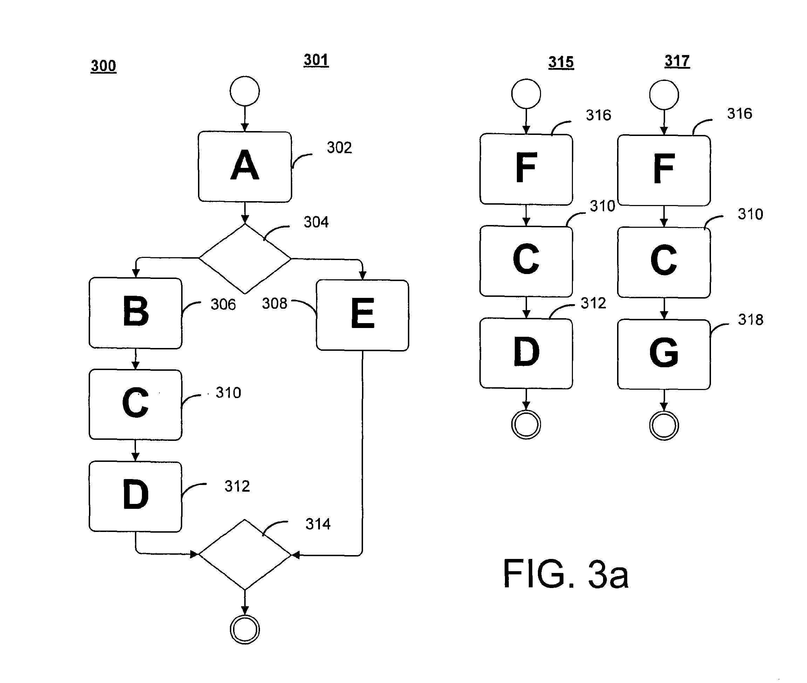

FIG. 3a depicts example process models according to an example embodiment. As shown in FIG. 3a, a first process model 301 includes a task node A 302 including an output edge to a split 304 to input edges to task nodes B 306 and E308. The task node B 306 includes an output edge to node C 310, which includes an output edge to a task node D 312. Task nodes D 312 and E 308 each include output edges to a join 314, which exits the first process model. As discussed previously, each task node represents a task instance associated with a task definition. For example, the task node C 310 may represent a task instance C corresponding to a task definition C. For example, the task definition C may include "copy and print document," and task definition information associated with the task "copy and print document" may be stored in the task definition storage area 112, and may be associated with multiple instances of the task definition. The task instance C may then include an instance of the "copy and print document" task, and task instance information associated with the task instance C represented by the task node C 310 of the first process model.

As shown in FIG 3a, the task nodes A 302, B 306, C 310, and D 312 of the first process model 301 are arranged in an ordered path, which is ordered according to an order of execution of the respective task instances A, B, C, D represented by each of the task nodes A 302, B 306, C 310, and D 312 included in the first process model 301. Further, the task nodes A 302 and E 308 of the first process model 301 are arranged in another ordered path, which is ordered according to an order of execution of the task instances represented by each of the task nodes A 302 and E 308 included in the first process model 301. Thus, if a user of an example system represented by the first process model 301 wants to know how changing a document maintenance format from a paper format to an electronic format might affect the system, the user may be able to determine that such a change may involve a change to the "copy and print document" task definition.

For example, instead of manually copying a paper copy on a copy machine, the "copy and print document" may be changed to copying an electronic document. In this case, the user may determine from the first process model 301 that the task node B 306 precedes the task node C 310, and that the task node 312 succeeds the task node C 310, which may represent a task instance of the task definition for the "copy and print document" task. For example, if the task node B 306 represents a task instance associated with a task definition B that includes physically retrieving a paper document to be copied, then the user may be able to determine that the task definition B may need to be revised to support the electronic document format. As a further example, if the task node D 312 represents a task instance associated with a task definition D that includes folding the copied document, addressing an envelope, and mailing the folded document via a mail carrier, the user may be able to determine that the task definition D may need to be revised, for example, to support an email transmission of an electronic document. Thus, from a perspective of the task node C 310 of the first process model 301, the user may at least determine that the example contemplated change to the example task definition C may result in saving a cost of paper, copy machine toner and maintenance, cost of paper envelopes, cost of postage, and the cost of personnel to manually copy and mail the paper documents.

However, as shown in FIG. 3a, at least two other process models may include task nodes representing the task definition C. For example, a second process model 315 may include task nodes F 316, C 310, and D 312, arranged in an ordered path, which is ordered according to an order of execution of respective task instances F, C, and D represented by each of the task nodes F 316, C 310, and D 312 included in the second process model 315. For example, if the task node F 316 represents a task instance associated with a task definition F that includes printing an electronic copy of a document to paper for copying by the task instance C, then the user may be able to determine that the task definition F may need to be revised so that paper and printer toner may not be wasted.

As a further example, a third process model 317 may include task nodes F 316, C 310, and G 318, arranged in an ordered path, which is ordered according to an order of execution of respective task instances F, C, and G represented by each of the task nodes F 316, C 310, and G 318 included in the third process model of FIG. 3a. For example, if the task node G 318 represents a task instance associated with a task definition G that includes physically carrying the copied document to an off-site storage facility for storage of backup copies, then the user may be able to determine that the task definition F may need to be revised to email an electronic copy of the document to an off-site electronic storage facility for storage of electronic backup copies so that paper and printer toner may not be wasted. However, this type of analysis involves analyzing each process model individually to determine effects of revising a task definition. If an organization has a large number of process models representing the organization's process flow, then this type of analysis of flat process models may be cumbersome, and may cause difficulty in producing a visualization of the effects of the revision for a user such as a manager.

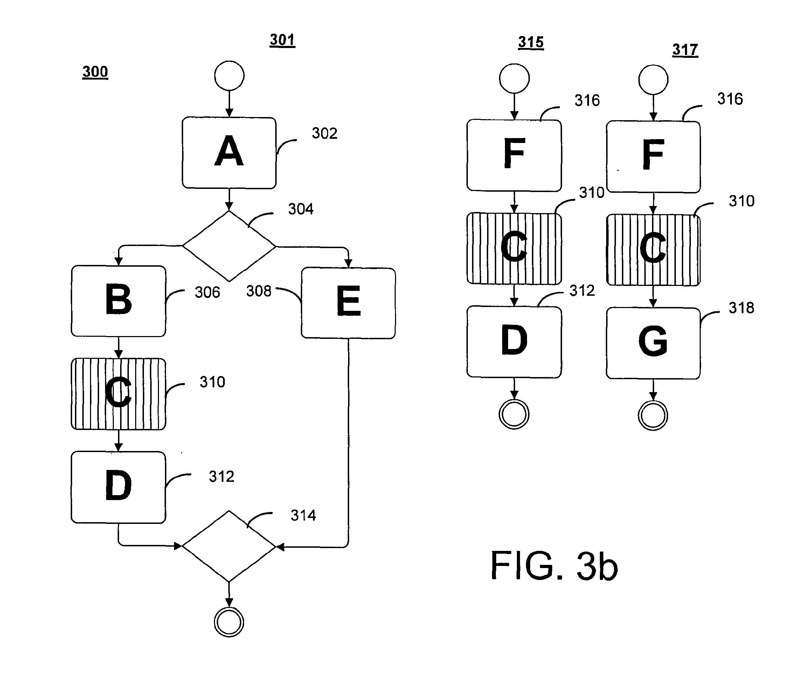

FIG 3b depicts the example process models 301, 315, 317 with highlighted nodes according to an example embodiment. According to an example embodiment, if the user determines a goal of changing a document format of a business from a paper format to an electronic format, then the user may desire a perspective view of processes of systems associated with the business from the perspective of tasks that involve the documents of the business. For example, the "copy and print document" task definition discussed previously may be selected as a perspective from which the user may wish to determine potential effects of the processes of the systems. Thus, the user may select the example task definition C discussed previously as a perspective. As discussed previously, task definition information associated with the task definition C may be stored in the task definition storage area 112, and may include instance indicator information indicating one or more task instances associated with the task definition C. Thus, the task definition information may include instance information indicating each of the task instances C represented by the task nodes C 310 included respectively in each of the first, second, and third process models 301, 315, 317 shown in FIG. 3b.

As discussed previously, task instance information associated with each of the task instances C may be stored in the task instance storage area 114, and may include instance location information indicating locations of task nodes representing each task instance C in the ordered paths included in the process models, according to an example embodiment. Thus, the task instance information may include instance location information indicating locations of each of the respective task nodes C 310 included in each of the respective process models as shown in FIG 3b. According to an example embodiment, the node location analysis engine 120 may request the instance location information to determine the locations within the respective process models of the respective task nodes C 310, for example, based on the process model information stored in the process model storage area 116. The example node location analysis engine 120 may then, for example, send an indication to a user of one or more relative locations in the ordered paths of the task nodes C 310 included in respective process models 301, 315, 317. For example, the GUI engine 128 may generate a highlighted display of the task nodes C 310 included in the process models 301, 315, 317 as shown in FIG. 3b. For example, the highlighted display may include a display of the task nodes C 310 filled or outlined with a color that is different from a fill color of other nodes included in the process models 301, 315, 317.

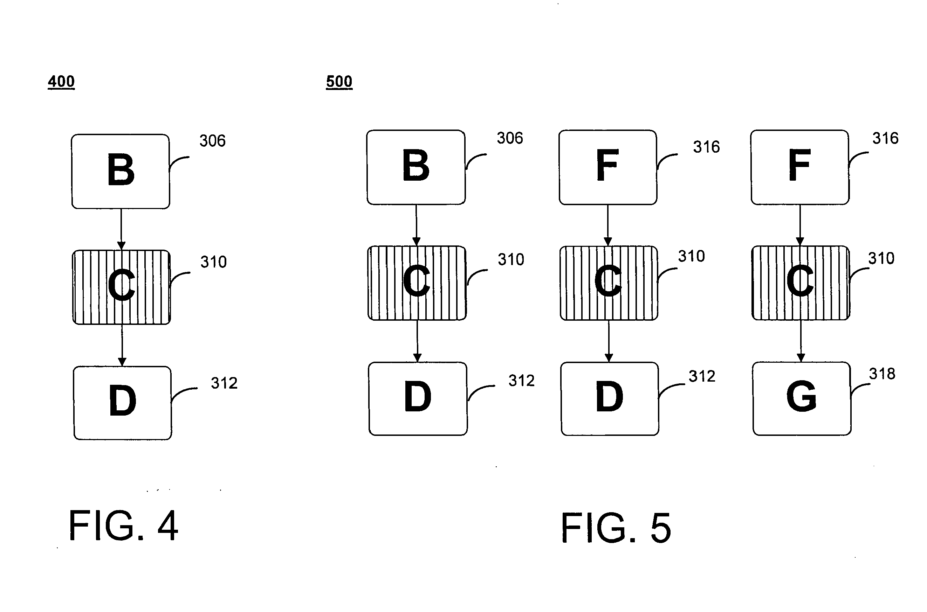

FIG 4 depicts an example portion of the process model 301 with a highlighted node according to an example embodiment. As shown in FIG. 4, the highlighted task node C 310 included in the first process model 301 of FIG 3a is preceded by the task node B 306, and is succeeded by the task node D 312 of the first process model 301 of FIG 3a.

FIG 5 depicts example portions of the example process models 301, 315, 317 with highlighted nodes according to an example embodiment. As shown in FIG 4, the highlighted task node C 310 included in the first process model 301 of FIG. 3a is preceded by the task node B 306, and is succeeded by the task node D 312 of the first process model 301 of FIG. 3a. Additionally, the highlighted task node C 310 included in the second process model 315 of FIG 3a is preceded by the task node F 316, and is succeeded by the task node D 312 of the second process model 315 of FIG 3a. Further, the highlighted task node C 310 included in the third process model 317 of FIG. 3 a is preceded by the task node F 316, and is succeeded by the task node G 318 of the first process model 317 of FIG. 3a.

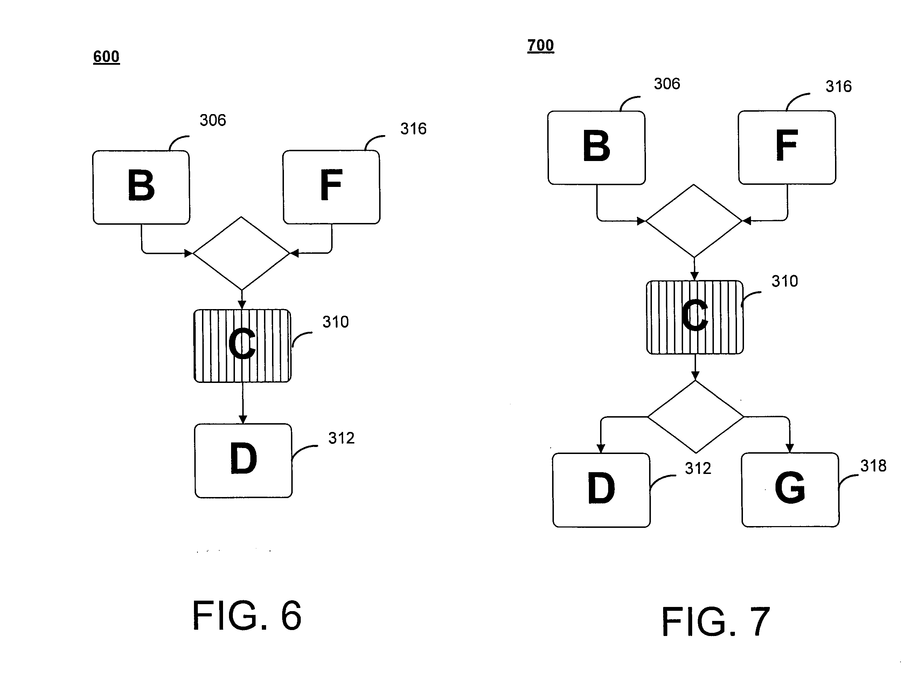

FIG. 6 depicts an example intermediate form of example aggregated process models with highlighted nodes according to an example embodiment. As shown in FIG 6, the first and second process models 301, 315 of FIG. 3a are aggregated. For example, the node location analysis engine 120 discussed previously may determine a predecessor node set of task nodes B 306 and F 316 based on determining predecessor nodes located immediately preceding each of the task nodes C 310 based on an ordering of task nodes associated with each ordered path of the example process models 301, 315, 317. The node location analysis engine 120 may further determine a successor node set of task nodes D 312 and G 318 based on determining successor nodes located immediately succeeding each of the task nodes C 310 based on an ordering of task nodes associated with each ordered path of the example process models 301, 315, 317.

The aggregation engine 124 discussed previously may then generate an ordered aggregated related node set based on aggregating the predecessor node set, the task nodes C 310, and the successor node set based on joining output edges of the task nodes included in the predecessor node set to an input edge of one of the task nodes C 310 and splitting an output edge of the one of the task nodes C 310 to input edges of the task nodes included in the successor node set. Thus, as shown in FIG 6, the output edges of task nodes B 306 and F 316 included in the predecessor set may be joined to an input edge to one of the task nodes C 310. As further shown in FIG 7, an output edge of the task node C 310 may be split to input edges of the task nodes D 312 and G 318 included in the successor set. According to an example embodiment, the node location analysis engine 120 may then send an indication to the user of one or more relative locations in an ordered aggregated related node set 700 of the task nodes included in the ordered aggregated related node set 700. According to an example embodiment, the GUI engine 128 may generate a highlighted display of the task node C 310 included in the ordered aggregated related node set 700.

Thus, based on the example ordered aggregated related node set 700 as shown in FIG. 7, it may be determined that each of the task nodes B 306 and F 316 precede the task node C 310 in some ordered path included in at least one of the three process models 301, 315, 317 shown in FIG. 3a. It may also be determined that each of the task nodes D 312 and G 318 succeed the task node C 310 in some ordered path included in at least one of the three process models 301, 315, 317 shown in FIG 3a. Thus, for example, a user may determine that outputs from either task nodes B 306 or F 316 may determine an input to the task node C 310. Further, the user may determine that an output from the task node C 310 may determine an input to either of the task nodes D 312 or G 318. Thus, for example, the user may be able to determine how changes to the task definition associated with the task node C 310 may affect at least the task definitions associated with the predecessor task nodes B 306, F 316 and/or the successor task nodes D 312, G 318. Thus, the user may more efficiently be able to determine global effects in a large number of process models that may result from making changes to one or more task definitions. Moreover, the user may more efficiently be able to determine the impact of a particular task definition on a system as a whole, or on the environment of the task definition within the system.

According to an example embodiment, it may also be possible to provide information regarding critical paths that include task nodes associated with task definitions associated with a perspective that may be of interest to a user.

As discussed previously, FIG 3a depicts three independent processes displayed via process models 301, 315, 317. More generally, each of the processes may be referred to as including the same "activity" C 310, for example, "print and file an application." If an organization decides, for example, to reengineer their business processes they may be interested in identifying a potential impact of any reengineering step, for example, of modifying a task. In order to understand the potential impact, a user may, for example, depict the entire process landscape from the perspective of this task. The process model after aggregation, as shown in FIG. 7, may depict a view of the entire process landscape from the perspective of the activity C 310 (i.e., "print and file an application"). As compared, for example, with other types of analyses such as quantitative analyses or value analyses, the analysis techniques discussed herein may aid in an understanding of what conditions may lead to printing and filing an application and what steps may follow the activity C 310. Thus, if a user is involved in a decision, for example, of whether to switch to an electronic filing of applications, then the understanding of the conditions may provide a better understanding of the potential impact of the proposed reengineering step, and may provide improved benefits if used in combination with other analysis techniques that may provide quantifiable analysis results.

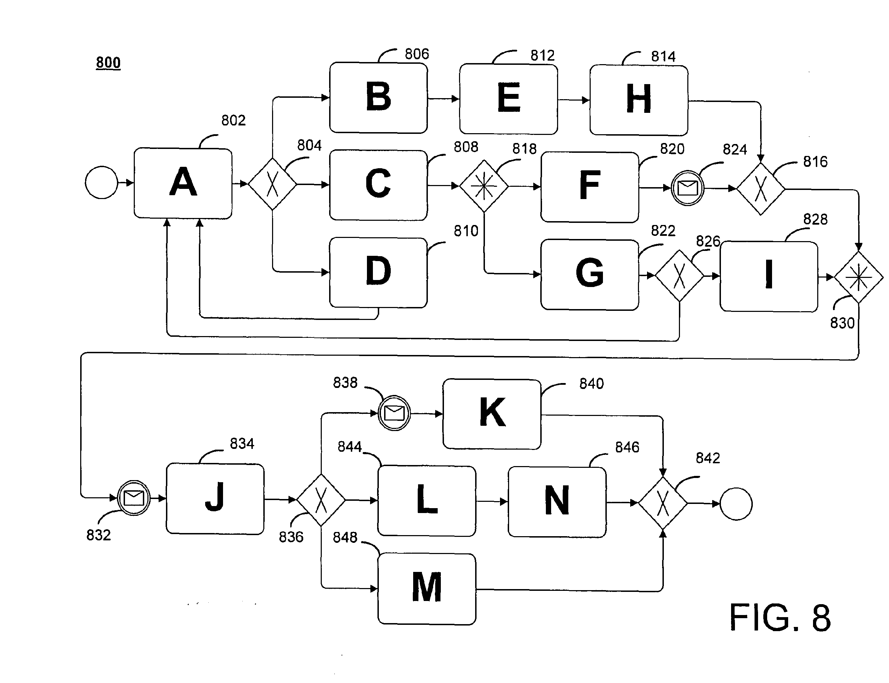

FIG. 8 depicts an example process model 800 according to an example embodiment. As shown in FIG. 8, the example process model 800 includes a task node A 802 including an output edge to a split 804 to input edges to task nodes B 806, C 808, and D 810. The task node B 806 includes an output edge to node E 812, which includes an output edge to a task node H 814, which includes an output edge to a join 816. Task node C 808 includes an output edge to a split 818 to task nodes F 820 and G 822. Task node F 820 includes an output edge to an envelope symbol 824, which includes an output edge to the join 816. Task node D 810 includes an output edge to task node A 802.

Task node G 822 includes an output edge to a split 826 which includes output edges to each of a task node I 828 and the task node A 802. Task node I 828 and the join 816 each include output edges to a join 830. The join 830 includes an output edge to an envelope symbol 832, which includes an output edge to a split 836. The split 836 includes a first output edge to an envelope symbol 838, which includes an output edge to a task node K 840, which includes an output edge to a join 842, which exits the process model.

The split 836 includes a second output edge to a task node L 844, which includes an output edge to a task node N 846, which includes an output edge to the join 842, which exits the process model. The split 836 further includes a third output edge to a task node M 848, which includes an output edge to the join 842, which exits the process model. As discussed previously, each example task node may represent an example task instance associated with an example task definition. For example, the task node G 822 may represent a task instance G corresponding to a task definition G. For example, the task definition G may include "call customer," and task definition information associated with the task "call customer" may be stored in the task definition storage area 112, and may be associated with multiple instances of the task definition. The task instance G represented by the example task node G 822 may then include an instance of the "call customer" task, and task instance information associated with the task instance G represented by the task node G 822 may be stored in the task instance storage area 114. Further, task node information associated with the task node G 822 may be stored in the process model storage area 116.

As shown in FIG. 8, the example task nodes A 802, B 806, E 812, H 814, J 834, L 844, and N 846 of the process model are arranged in an ordered path, which is ordered according to an order of execution of the respective task instances A, B, E, H, J, L, N represented by each of the task nodes A 802, B 806, E 812, H 814, J 834, L 844, and N 846 included in the process model. As a further example, the task nodes A 802, C 808, G 822, I 828, J 834, and M 848 of the process model are arranged in another ordered path, which is ordered according to an order of execution of the task instances represented by each of the task nodes A 802, C 808, G 822, I 828, J 834, and M 848 included in the process model. Thus, if a user of an example system represented by the process model 800 wants to know what parts of the system may be affected, for example, by changes from a customer satisfaction perspective, the user may be able to determine tasks that may affect tasks such as "call customer." For example, if a user determines that a task node for "call customer" is preceded by receipt of a certain number of customer complaints, then the user may understand that the customer call task node may be intended to resolve an undesirable situation with the customer. However, if the user determines that the task node for "call customer" is preceded by receipt of a certain number of substantial customer orders, then the user may understand that the "call customer" task node may be intended to reward the customer, for example, with incentives to attract more orders from the customer.

The user may wish to determine critical paths that may be relevant to a particular goal of the user. For example, a perspective may be associated with a goal of the user such as customer satisfaction.

FIG 9 depicts an example view of an example association of key performance indicators (KPI_{S}) and selected task definitions according to an example embodiment. As shown in FIG 9, an example tree structure 900 may include a root 902 of management views. A first example level in the tree may include a perspective of a key performance indicator (KPI) view business processes level 904 that includes two children levels including a perspective of a customer satisfaction level 906 and a supply chain efficiency level 908.

Task definitions may be selected to associate with the example perspectives shown in FIG 9, for example, via the association engine 122. Thus, for example, a user may select the task nodes G 822 and M 848 of FIG. 8 for association with the perspective customer satisfaction 906. For example, the task node G 822 associated with the task "call customer" may be selected to be associated with the perspective customer satisfaction 906. As another example, if the task node M 848 represents a task instance associated with a task definition "delete customer account" then the task node G 822 associated with the task "delete customer account" may be selected to be associated with the perspective customer satisfaction 906. Thus, if the user requests information relating to the perspective customer satisfaction 906, then the task definitions associated with the task nodes G 822 and M 848 that are associated with the perspective customer satisfaction may be used to determine a perspective view of the process model. The user may further select the task nodes E 812 and L 844 for association with the perspective supply chain efficiency 908. The example association engine 122 may then generate associations between the respective perspectives and task definitions.

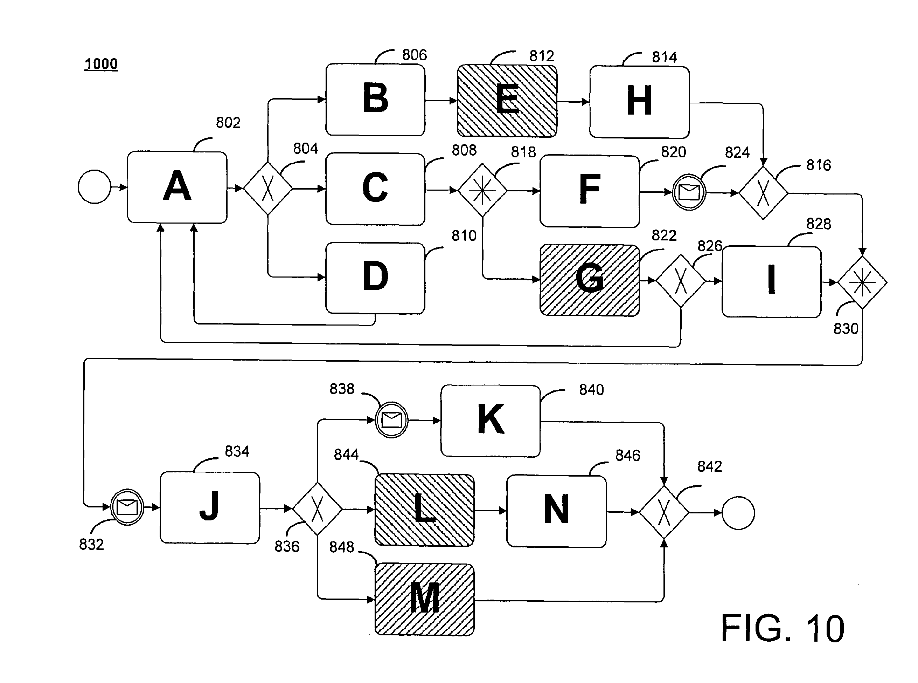

FIG 10 depicts an example representation 1000 of the process model 800 in an intermediate form during an example perspective analysis processing according to an example embodiment. After the user has selected the task nodes G 822 and M 848 for association with the perspective customer satisfaction 906, the process model 1000 may be displayed, for example, with the selected task nodes highlighted according to their respective associated perspective. For example, the task nodes G 822 and M 848 (e.g., all task nodes associated with task instances associated with task definitions G and M) may be highlighted by the GUI engine 128 with slanted lines slanted upward from left to right.

Similarly, after the user has selected the task nodes E 812 and L 844 for association with the perspective supply chain efficiency 908, the process model 1000 may be displayed, for example, with the selected task nodes highlighted according to their respective associated perspective. For example, the task nodes E 812 and L 844 (e.g., all task nodes associated with task instances associated with task definitions E and L) may be highlighted by the GUI engine 128 with slanted lines slanted downward from left to right. One skilled in the art of data processing will appreciate that many different techniques may be used for highlighting, for example, highlighting with flashing or different fill or outline colors for task nodes associated with different perspectives.

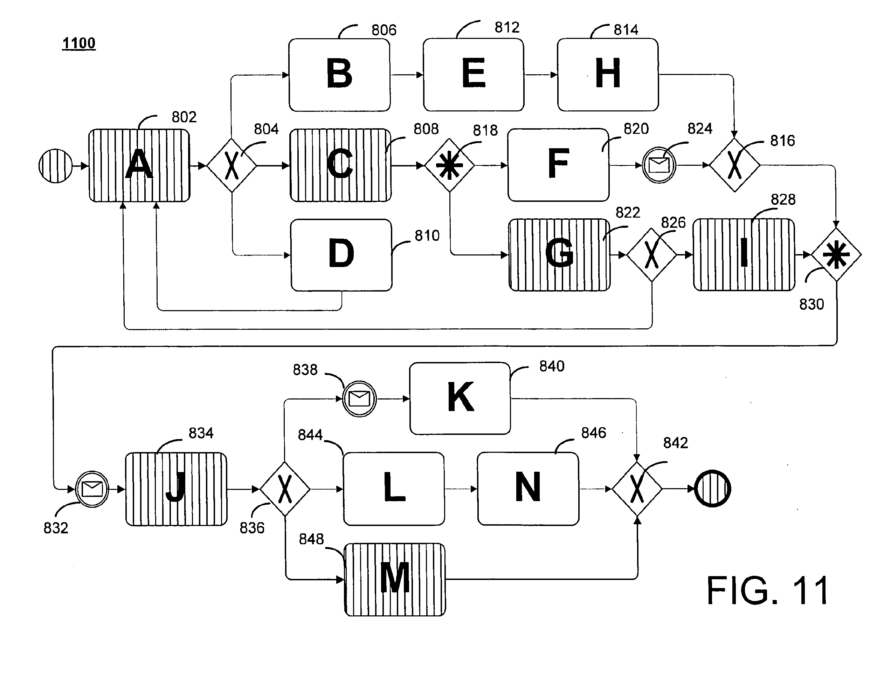

FIG 11 depicts an example representation of the process model 800 in an intermediate form during an example perspective analysis processing according to an example embodiment. For example, a critical path A 802, C 808, G 822, I 828, J 834, M 848 related to the perspective customer satisfaction 906 may be determined by the critical path engine 126 based on determining that task definitions G and M are associated with tasks represented by the task nodes G 822 and M 848. The critical path A 802, C 808, G 822, I 828, J 834, M 848 may then be displayed as highlighted nodes according to the associated perspective, as shown in FIG. 11.

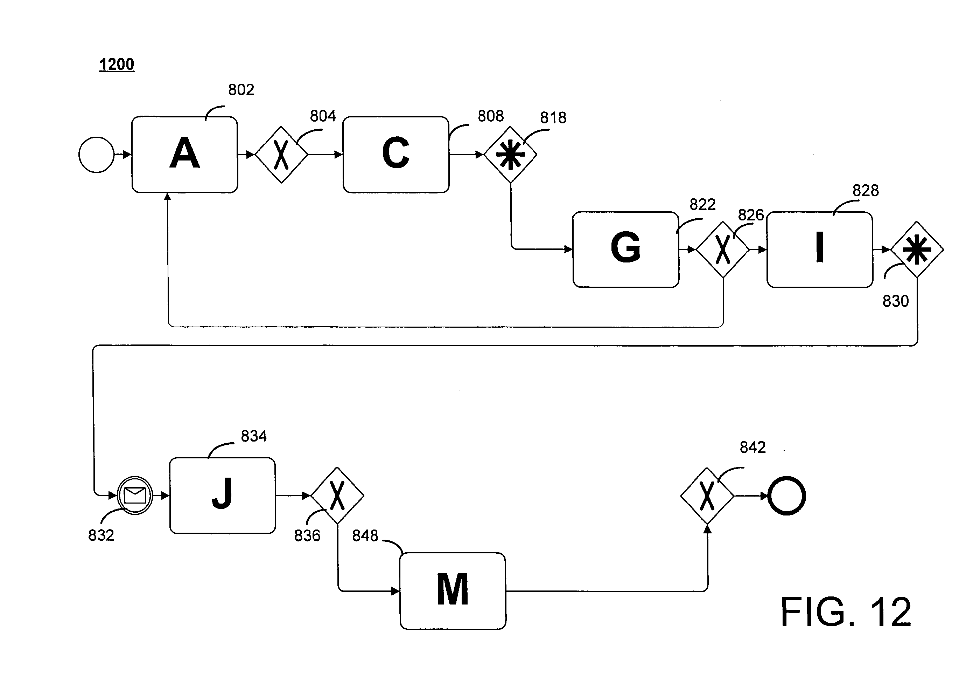

FIG 12 depicts an example critical path 1200 of the example process model 800 based on an example perspective analysis processing according to an example embodiment. For example, the highlighted critical path A 802, C 808, G 822, I 828, J 834, M 848 discussed previously with regard to FIG. 11 may be displayed via the example GUI engine 128 and the user interface 104 with no task nodes other than the nodes included in the critical path that includes the task nodes G 822 and M 848 based on the example perspective customer satisfaction 906.

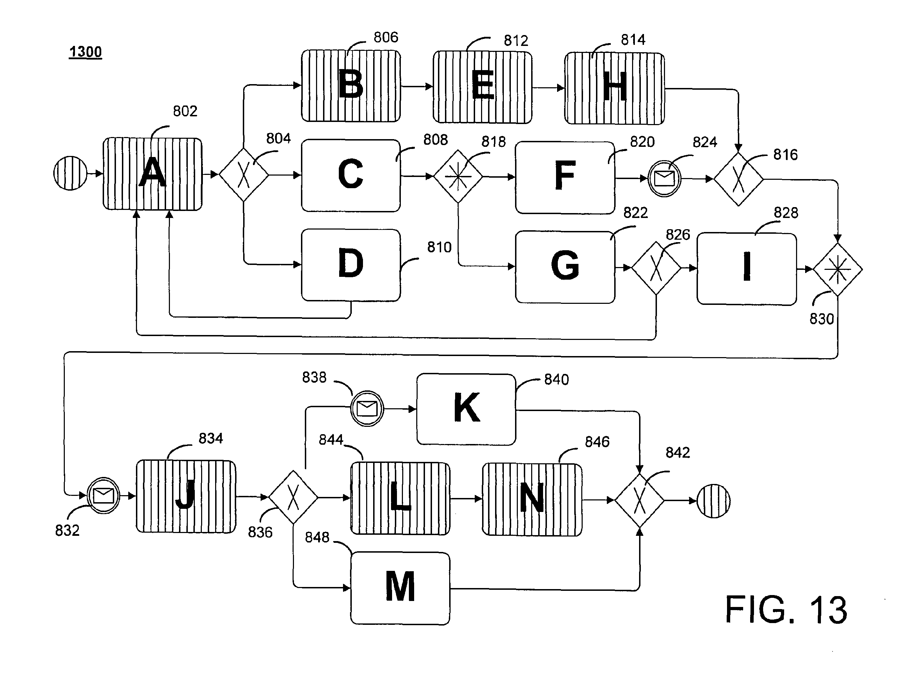

FIG. 13 depicts an example representation 1300 of the process model 800 in an intermediate form during an example perspective analysis processing according to an example embodiment. For example, a critical path A 802, B 806, E 812, H 814, J 834, L 844, N 846 related to the perspective supply chain efficiency 908 may be determined by the critical path engine 126 based on determining that task definitions E and L are associated with tasks represented by the task nodes E 812 and L 844. The critical path A 802, B 806, E 812, H 814, J 834, L 844, N 846 may then be displayed as highlighted nodes according to the associated perspective, as shown in FIG 13.

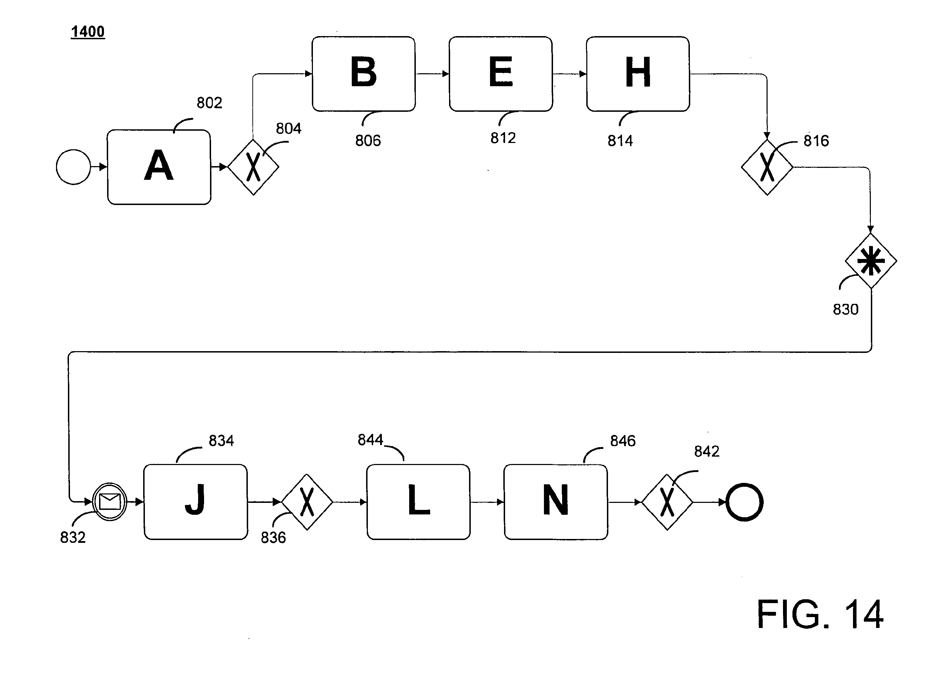

FIG 14 depicts an example critical path 1400 of a process model based on an example perspective analysis processing according to an example embodiment. For example, the highlighted critical path A 802, B 806, E 812, H 814, J 834, L 844, N 846 discussed previously with regard to FIG. 13 may be displayed with no task nodes other than the nodes included in the critical path that includes the task nodes E 812 and L 844. based on the example perspective supply chain efficiency 908.

As shown, the process model of FIG. 8 depicts a simple process. However a manager of a major corporation may not be interested in viewing such a display, as managers may tend to prefer views of items based on concepts such as key performance indicators, strategic goals, and actions aimed toward achieving strategic goals, as depicted in the tree diagram of FIG. 9 discussed previously. As shown in FIG 9, single activities of the process may be hierarchically ordered, for example, under selected key performance indicators, highlighting that the efficiency of their execution may directly influence the value of a key performance indicator. Thus, a manager may refer to this view as a "perspective." The techniques discussed herein may thus highlight the process from a perspective, for example, defined by managers. As shown in FIGs. 12 and 14, the final steps of one of the example techniques may generate highlighted portions of the original process shown in FIG 8 that may be viewed as critical from a particular predetermined perspective. Critical processes from perspectives may appear differently depending on who defines which perspective. Thus, different users may define perspectives differently, and each different user may obtain a different highlighted view of the original process.

As yet another example, a user may relate a task definition, for instance, "call customer," to a KPI called customer satisfaction. For example, the task node G 822 may be related to the customer satisfaction KPI 906 as discussed previously with regard to FIG 9. Then the example node location analysis engine 120 may search for occurrences of this "call customer" task, i.e., all processes where a customer must be called. For example, with regard to one process the customer may be called after the customer escalated an activity. For example, with regard to another process, the customer may be called because someone wants to make a proposal to the customer. For example, with regard to yet a third process the customer may be called because of a third reason.

If, for example, a business process reengineering technician then needs to analyze the environment of the task "call customer," then the task may be aggregated as discussed previously, to provide the technician with a better understanding of potential impacts of revisions to the task. For example, the process model resulting from the aggregation may depict the predecessor tasks of either the customer escalated an activity, or a proposal may be made to the customer, or the third reason that may precede the customer call, and following a join, the activity itself may appear in the aggregated model. The example business process reengineering technician may then obtain a better understanding of a potential impact of the process based on proposed revisions of the "call customer" task.

Example techniques discussed herein may enhance accessibility to process models by managerial users. An example technique may provide a depiction of the process landscape, for example, from the perspectives of critical events or activities. For example, the example techniques may provide a display of a path within a complex process model that may be considered critical from a particular example perspective. Example perspectives may include key performance indicators, ABC classes, scorecard items, portfolio categories, or other perspectives of managerial concern. For example, perspectives may be depicted as a highlighted path through a complex process model or as an integrated picture that depicts predecessors or successors linked to a critical process element. From the user viewpoint, the highlighted views may appear to make the highlighted nodes "come alive," thus advantageously enhancing the viewer experience in distinguishing the highlighted portions of a display.

Implementations of the various techniques described herein may be implemented in digital electronic circuitry, or in computer hardware, firmware, software, or in combinations of them. Implementations may implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described implementations have been illustrated as described herein, many modifications, substitutions, changes and equivalents will now occur to those skilled in the art. It is, therefore, to be understood that the appended claims are intended to cover all such modifications and changes as fall within the true spirit of the embodiments.

## Claims

1. A system comprising:
a perspective analysis processor including:
a perspective engine configured to determine a first perspective based on a first goal of a user,
a task definition engine configured to select a first task definition related to the first goal, wherein the first task definition is selected from a plurality of task definitions each representing a predetermined task
a process model manager configured to obtain one or more process models, wherein each process model includes a plurality of task nodes arranged in one or more ordered paths, wherein each of the task nodes represents a task instance associated with one of the task definitions, wherein the ordered paths are ordered according to an order of execution of the task instance represented by each task node included in each process model, and
a node location analysis engine configured to determine a first related node set of one or more of the task nodes based on determining one or more of the task nodes representing task instances associated with the first task definition, and send an indication to the user of one or more relative locations in the ordered paths of the task nodes included in the first related node set.

2. The system of claim 1 comprising:
a process repository configured to store information associated with the one or more process models.

3. The system of claim 2 wherein the process repository comprises:
a process model storage area configured to store process model information;
a task definition storage area configured to store task definition information associated with one or more task definitions associated with task nodes included in one or more process models associated with the process model information; and
a task instance storage area configured to store task instance information associated with one or more task instances associated with one or more task definitions associated with the task definition information.

4. The system of claim 2 or 3 wherein the task definition information comprises instance indicator information indicating one or more task instances associated with each task definition.

5. The system of any one of claims 2 to 4 wherein the task instance information comprises instance location information indicating locations of task nodes representing each task instance in the ordered paths.

6. The system of any one of claims 1 to 5 wherein the node location analysis engine is configured to:
determine a first predecessor node set of one or more of the task nodes based on determining predecessor nodes located immediately preceding each of the task nodes included in the first related node set based on an ordering of task nodes associated with each ordered path, and
determine a first successor node set of one or more of the task nodes based on determining successor nodes located immediately succeeding each of the task nodes included in the first related node set based on an ordering of task nodes associated with each ordered path,
wherein the perspective analysis processor comprises:
an aggregation engine configured to generate an ordered aggregated related node set based on aggregating the first predecessor node set, the first related node set, and the first successor node set based on joining output edges of the task nodes included in the first predecessor node set to an input edge of one of the task nodes included in the first related node set and splitting an output edge of the one of the task nodes included in the first related node set to input edges of the task nodes included in the first successor node set.

7. The system of claim 6 wherein the node location analysis engine is configured to:
send an indication to the user of one or more relative locations in the ordered aggregated related node set of the task nodes included in the ordered aggregated related node set.

8. The system of any one of claims 1 to 7 wherein the perspective engine is configured to perform one or more of:
determining a key performance indicator (KPI) based on the first goal of the user, determining a scorecard based on the first goal of the user,
determining a portfolio based on the first goal of the user,
determining a Strengths, Weaknesses, Opportunities, Threats (SWOT) category based on the first goal of the user, or
determining an activity based costing (ABC) class based on the first goal of the user.

9. The system of any one of claims 1 to 8 wherein the first perspective comprises one or more of a key performance indicator (KPI), a frequency of task node occurrence in the process models, a task cost, an importance of an event, or a context.

10. The system of any one of claims 1 to 9 comprising:
an association engine configured to generate a first association between the first perspective and the first task definition, wherein
the task definition engine is configured to select the first task definition related to the first goal based on the first association.

11. The system of claim 10 wherein:
the association engine is configured to generate a second association between the first perspective and a second task definition,
the task definition engine is configured to select the second task definition related to the first goal based on the second association, wherein the second task definition is selected from the plurality of task definitions each representing a predetermined task,
wherein
the node location analysis engine is configured to determine the first related node set of one or more of the task nodes based on determining one or more of the task nodes representing task instances associated with the first task definition or the second task definition.

12. The system of any one of claims 1 to 11 comprising:
a critical path engine configured to determine a first critical path related to the first perspective based on determining that the first task definition is associated with a first task represented by one of the task nodes, wherein the first critical path includes one of the ordered paths included in one of the process models.

13. The system of claim 12 wherein:
the critical path engine is configured to send an indication to the user of relative locations in the first critical path of the task nodes included in the first critical path.

14. The system of claim 12 or 13comprising:
a graphical user interface (GUI) engine configured to generate a highlighted display of one or more of the task nodes included in the first critical path.

15. The system of any one of claims 12 to 14 wherein:
the perspective engine is configured to determine a second perspective based on a second goal of the user,
the task definition engine is configured to determine a second task definition related to the second goal,
the node location analysis engine is configured to determine a second related node set of one or more of the task nodes based on determining one or more of the task nodes representing task instances associated with the second task definition, and send an indication to the user of one or more relative locations in the ordered paths of the task nodes included in the second related node set, and
the critical path engine is configured to determine a second critical path related to the second perspective based on determining that the second task definition is associated with a second task represented by a second one of the task nodes included in the second related node set, wherein the second critical path includes one of the ordered paths included in one of the process models.

16. The system of claim 15 comprising:
a graphical user interface (GUI) engine configured to generate a highlighted display of one or more of the task nodes included in the second critical path.

17. The system of any one of claims 1 to 16 comprising:
a graphical user interface (GUI) engine configured to send to the user a graphical display of the one or more relative locations in the ordered paths of the task nodes included in the first related node set.

18. The system of claim 17 wherein the GUI engine is configured to send to the user a graphical display of the one or more relative locations in the ordered paths of the task nodes included in the first related node set, wherein the graphical display includes a display of the task nodes included in the first related node set displayed based on a color different from a color used for displaying task nodes not included in the first related node set.

19. A computer-implemented method comprising:
determining a first perspective based on a first goal of a user;
selecting a first task definition related to the first goal, wherein the first task definition is selected from a plurality of task definitions each representing a predetermined task;
obtaining one or more process models, wherein each process model includes a plurality of task nodes arranged in one or more ordered paths, wherein each of the task nodes represents a task instance associated with one of the task definitions, wherein the ordered paths are ordered according to an order of execution of the task instance represented by each task node included in each process model;
determining a first related node set of one or more of the task nodes based on determining one or more of the task nodes representing task instances associated with the first task definition; and
sending an indication to the user of one or more relative locations in the ordered paths of the task nodes included in the first related node set.

20. The method of claim 19 comprising:
generating a display of the task nodes included in one or more of the ordered paths, wherein the display includes a highlighted display of the displayed task nodes that are included in the first related node set.

21. The method of claim 19 or 20 comprising:
determining a first predecessor node set of one or more of the task nodes based on determining predecessor nodes located immediately preceding each of the task nodes included in the first related node set based on the order of execution;
determining a first successor node set of one or more of the task nodes based on determining successor nodes located immediately succeeding each of the task nodes included in the first related node set based on the order of execution; and
generating an ordered aggregated related node set based on aggregating the first predecessor node set, the first related node set, and the first successor node set based on joining output edges of the task nodes included in the first predecessor node set to an input edge of one of the task nodes included in the first related node set and splitting an output edge of the one of the task nodes included in the first related node set to input edges of the task nodes included in the first successor node set.

22. The method of claim 21 comprising:
sending an indication to the user of one or more relative locations in the ordered aggregated related node set of the one of the task nodes included in the ordered aggregated related node set.

23. The method of any one of claims 19 to 22 wherein determining the first perspective comprises one or more of:
determining a key performance indicator (KPI) based on the first goal of the user, determining a scorecard based on the first goal of the user,
determining a portfolio based on the first goal of the user,
determining a Strengths, Weaknesses, Opportunities, Threats (SWOT) category based on the first goal of the user, or
determining an activity based costing (ABC) class based on the first goal of the user.

24. The method of any one of claims 19 to 23 wherein the first perspective comprises one or more of a key performance indicator (KPI), a frequency of task node occurrence in the process models, a task cost, an importance of an event, or a context.

25. The method of any one of claims 19 to 24 comprising:
generating a first association between the first perspective and the first task definition, wherein
selecting the first task definition related to the first goal comprises selecting the first task definition related to the first goal based on the first association.

26. The method of claim 25 comprising:
generating a second association between the first perspective and a second task definition; and
selecting the second task definition related to the first goal based on the second association, wherein the second task definition is selected from the plurality of task definitions each representing a predetermined task, wherein
determining the first related node set comprises determining the first related node set of one or more of the task nodes based on determining one or more of the task nodes representing task instances associated with the first task definition or the second task definition.

27. The method of any one of claims 19 to 26 comprising:
determining a first critical path related to the first perspective based on determining that the first task definition is associated with a first task represented by one of the task nodes, wherein the first critical path includes one of the ordered paths included in one of the process models.

28. The method of claim 27 comprising:
sending an indication to the user of relative locations in the first critical path of the task nodes included in the first critical path.

29. The method of claim 27 comprising:
generating a highlighted display of one or more of the task nodes included in the first critical path.

30. The method of any one of claims 19 to 29 comprising:
determining a second perspective based on a second goal of the user;
selecting a second task definition related to the second goal, wherein the second task definition is selected from the plurality of task definitions each representing a predetermined task;
determining a second related node set of one or more of the task nodes based on determining one or more of the task nodes representing task instances associated with the second task definition; and
sending an indication to the user of one or more relative locations in the ordered paths of the task nodes included in the second related node set.

31. The method of claim 30 comprising:
determining a second critical path related to the second perspective based on determining that the second task definition is associated with a second task represented by one of the task nodes, wherein the second critical path includes one of the ordered paths included in one of the process models.

32. The method of claim 31 comprising:
generating a highlighted display of one or more of the task nodes included in the second critical path.

33. A computer program product being tangibly embodied on a computer-readable medium and being configured to cause a data processing apparatus to:
determine a first perspective based on a first goal of a user;
select a first task definition related to the first goal, wherein the first task definition is selected from a plurality of task definitions each representing a predetermined task;
obtain one or more process models, wherein each process model includes a plurality of task nodes arranged in one or more ordered paths, wherein each of the task nodes represents a task instance associated with one of the task definitions, wherein the ordered paths are ordered according to an order of execution of the task instance represented by each task node included in each process model;
determine a first related node set of one or more of the task nodes based on determining one or more of the task nodes representing task instances associated with the first task definition; and
send an indication to the user of one or more relative locations in the ordered paths of the task nodes included in the first related node set.

34. The computer program product of claim 33 wherein the first perspective comprises one or more of a key performance indicator (KPI), a scorecard, a portfolio, a Strengths, Weaknesses, Opportunities, Threats (SWOT) category, or an activity based costing (ABC) class.

35. The computer program product of claim 33 or 34 wherein the first perspective comprises one or more of a key performance indicator (KPI), a frequency of task node occurrence in the process models, a task cost, an importance of an event, or a context.
